# EUROPEAN PATENT SPECIFICATION

(11) **EP 2 179 468 B1**
(45) Date of publication and mention of the grant of the patent: **28.03.2012**
(21) Application number: 08773644.3
(22) Date of filing: 25.06.2008
(51) Int. Cl.: H01M 8/04, H01M 8/00, H01M 8/10

(54) **FUEL CELL SYSTEM AND METHOD FOR OPERATION OF A FUEL CELL SYSTEM**
BRENNSTOFFZELLENSYSTEM UND VERFAHREN ZUM BETRIEB EINES BRENNSTOFFZELLENSYSTEMS
SYSTÈME DE PILE À COMBUSTIBLE ET PROCÉDÉ DE FONCTIONNEMENT D'UN SYSTÈME DE PILE À COMBUSTIBLE

(30) Priority: 20.08.2007 DE 102007039236
(43) Date of publication of application: 28.04.2010
(73) Proprietor: Daimler AG, 70327 Stuttgart (DE)
(72) Inventor: SCHABEL, Hans-Jörg, 72644 Oberboihingen (DE)
(74) Representative: Moore, Derek
(86) International application number: PCT/EP2008/005137
(87) International publication number: WO 2009/024203

(56) References cited:
- EP-A- 1 313 161
- EP-A- 1 796 197
- WO-A-02/27848
- US-B1- 6 259 971

## Description

The invention relates to a fuel cell system having at least one fuel cell, by means of which water is produced during operation. The invention also relates to a method for operation of a fuel cell system.

DE 103 59 952 B4 discloses a fuel cell system in which fuel gas and oxidation gas which are supplied to a fuel cell stack are intended to be moisturized with water. For this purpose, a plurality of moisturizers are provided in the off-gas path of the fuel cell, and are connected to condensation apparatuses. A further auxiliary moisturizer which is connected to one of the condensation apparatuses comprises ultrasound micro-injection nozzles, which open into supply lines to the fuel cell. Each nozzle sprays the water supplied to it into the respective supply lines to the fuel cell.

Furthermore, DE 603 04 255 T2 discloses a fuel cell system in which a shut-off valve between the water induction part and a pump is intended to provide protection against freezing. The fuel cell system has an anode moisturizing injection nozzle and a cathode moisturizing injection nozzle, which are respectively used as moisturizing apparatuses for the anode and for the cathode, and by means of which water is sprayed into the supply lines or into the fuel cell.

WO 02/27848 A discloses a fuel cell system, with which the gas and water stream flowing through the drainage line is monitored by means of a Venturi nozzle.

EP 1 313 161 A discloses a fuel cell system wherein the cooling effiency is enhanced by guiding water from a water collecting unit to a radiator and spraying onto the radiator by employing a nozzle.

US 6 259 971 B1 discloses a fuel cell, where the exhaust port releases moist air and water droplets. The droplets are atomized by an atomizer.

A relatively large amount of liquid water is produced during operation, because of the functional principle of a fuel cell. This must then be dissipated, or must first of all be collected and then dissipated. When using a fuel cell system for mobile purposes, for example in a motor vehicle, this liquid water is then passed out of the off-gas line or the exhaust to the roadway. At relatively low temperatures, in particular close to or below the zero-degree limit, this can lead to this water freezing on the roadway. Particularly where there are a very large number of vehicles, for example in city traffic or else in a jam or slow-moving traffic, this can relatively easily and quickly lead to the roadway becoming icy. This process is in particular made worse if the water is simply let out and therefore drips in relatively large droplets onto the roadway, or even runs out in a corresponding run.

The object of the present invention is to provide a fuel cell system and a method for operation of a fuel cell system, in which the amount of liquid water dripping or running out, and the slight freezing resulting from this at low temperatures on the roadway, can be at least greatly reduced.

This object is achieved by a fuel cell system which has the features according to Claim 1, and by a method which has the features according to Claim 11.

The fuel cell system according to the invention comprises at least one fuel cell which produces water during operation. The fuel cell system comprises at least one atomizer apparatus, by means of which the water which is produced can be atomized into the environment. This embodiment makes it possible to prevent water from dripping or running out in a run from the fuel cell system. The atomizing process produces very fine water particles which are mixed into the environment and therefore no longer drip or run directly onto the roadway. Since the atomizer apparatus produces very fine water particles, these are passed into the environment, and only a small proportion of them reaches the roadway. The amount of very fine water particles which flow down directly onto the roadway can in this way be considerably reduced, or can be distributed over a large area by means of a relative large particle cloud, thus making it possible to at least reduce the amount of freezing on the roadway.

In particular, the water is produced on the cathode side of the fuel cell, and this should preferably be atomized into the environment. Water is also produced on the anode side, and should likewise be atomized. Normally, however, a greater proportion of water is produced on the cathode side and it is therefore particularly important to atomize this relatively large quantity.

The atomizer apparatus is preferably in the form of a nozzle. This embodiment ensures a relatively simple and low-cost design which, furthermore, can also be fitted in a space-saving manner and is designed to be functionally reliable.

It has been found to be particularly preferable for the atomizer apparatus to be in the form of a two-material nozzle. A design such as this allows the atomizing process to be actively assisted when the pressure difference from the environment is not sufficiently high. The use of compressed air may additionally be provided for a two-material nozzle for this purpose, and if required this can be achieved by means of a suitable pump. In a two-material nozzle, atomizing is achieved with the aid of gas. The atomizing process does not require a high liquid pressure. If the air pressure in the system is sufficiently high for atomizing using the two-material nozzle, the compressed air can also be ensured via the air supply to the fuel cell.

The atomizer apparatus is preferably arranged in an off-gas line, which is associated with the off-gas path, of the cathode of the fuel cell.

It is part of the invention for the opening of the atomizer apparatus to be arranged oriented upwards with respect to the ground, in particular the roadway, at an angle of more than 0° and less than 180°. Particularly when the fuel cell system is in the form of a mobile system and is arranged in a motor vehicle, this makes it possible to further improve the dissipation of the water that is produced, when the motor vehicle is being driven at low temperatures. In addition to the fine atomizing of the water into very small water particles, this orientation of the opening of the atomizer apparatus also makes it possible to ensure that the water is not atomized in the direction of the roadway. The process of atomizing the water upwards results in the water particle cloud being conveyed away from the roadway into the environment, thus making it possible once again to make a positive contribution to avoiding freezing on the roadway.

The water that is produced can preferably be collected in one or more separators, and can be combined in the atomizer apparatus for atomizing into the environment. A separator is preferably arranged in a supply line or an off-gas line of the anode or of the cathode of the fuel cell.

The atomizer apparatus may be integrated in an outlet valve which is arranged in the off-gas path. A functional component such as this makes it possible on the one hand to reduce the number of components in the fuel cell system, and furthermore to ensure a compact design.

However, it is also possible for the atomizer apparatus to be in the form of a separate part, and to be arranged separately from the outlet valve, downstream from the outlet valve in the off-gas path, in the flow direction of the off gas. The line part between the outlet valve and the atomizer apparatus can then preferably be a line which can be heated.

It is also possible for the atomizer apparatus to have an associated separator in the fuel cell system, which is designed to separate the water that is produced during operation. In this case, it is preferably possible for the atomizer apparatus to be integrated in the separator. For example, it can be integrated in the housing of the separator. This also makes it possible to reduce the number of components and to achieve a space-saving design.

It is particularly preferable for the atomizer apparatus to open directly into the environment. The water which is atomized by the atomizer apparatus is then atomized directly into the environment.

It is also possible for the atomizing process to take place indirectly into the environment. In particular, in this case, it is possible for the atomizer apparatus to open into an off-gas line, which leads away from the cathode of the fuel cell, and for the water to be atomized into the off-gas line from the cathode. In this case, it is particularly preferable for the atomizer apparatus to be provided close to the output, which opens into the environment, of the off-gas line from the cathode. This allows the atomized water particles to be produced relatively close to the output from the off-gas line, and to then also still emerge as fine water particles into the environment. This opening of the atomizer apparatus close to the output into the off-gas line from the cathode makes it possible to prevent a water run or very large water droplets being formed in this off-gas line from the cathode before the outlet, and it is therefore also possible to prevent a water run or large droplets once again then being able to drip onto the roadway from this off-gas line from the cathode.

In a method according to the invention for operation of a fuel cell having at least one fuel cell, water is produced during operation of the fuel cell. The water is atomized into the environment by an atomizer apparatus. This procedure makes it possible to prevent large amounts of water or water runs from dripping onto the roadway thus making it possible to at least considerably reduce the production of smooth ice at low temperatures. Advantageous embodiments of the fuel cell system according to the invention may be regarded as advantageous embodiments of the method according to the invention.

Exemplary embodiments of the invention will be explained in more detail in the following text with reference to schematic drawings, in which:
Figure 1 shows a first exemplary embodiment of a fuel cell system according to the invention;
Figure 2 shows a second exemplary embodiment of a fuel cell system according to the invention;
Figure 3 shows a third exemplary embodiment of a fuel cell system according to the invention;
Figure 4 shows a schematic illustration of the orientation of the atomizer apparatus with respect to the roadway;
Figure 5 shows a fourth exemplary embodiment of a fuel cell system according to the invention; and
Figure 6 shows a fifth exemplary embodiment of a fuel cell system according to the invention.

Identical elements or elements having the same function are provided with the same reference symbols in the figures.

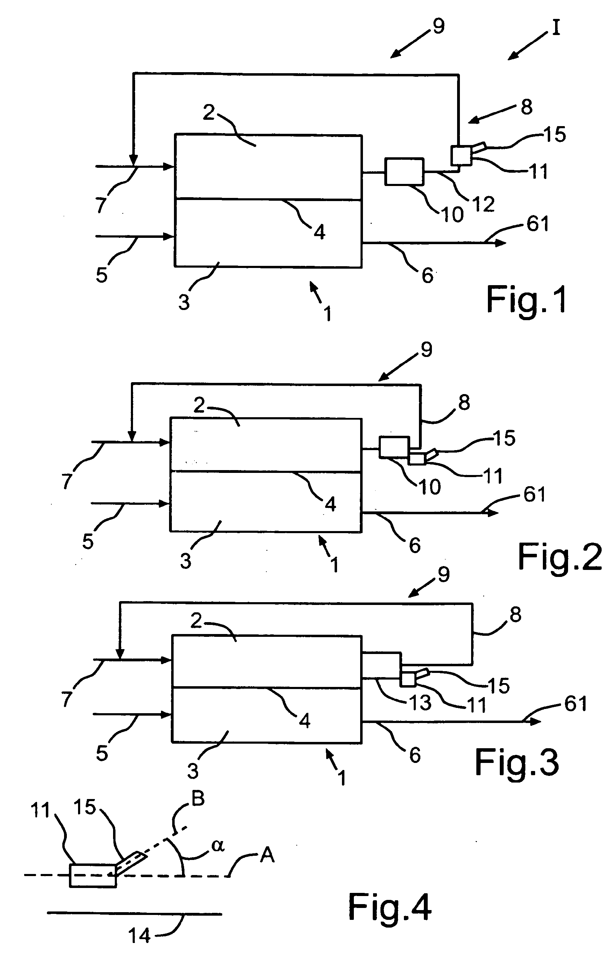

Figure 1 shows a schematic illustration of a detail of a fuel cell system I. The fuel cell system I may have a multiplicity of further components, but these are of secondary importance to understanding of the invention, and are therefore not illustrated.

The fuel cell system I is in the form of a mobile system, and is arranged in a motor vehicle. The fuel cell system I comprises a fuel cell stack, with only one fuel cell 1 being illustrated in Figure 1, by way of example. The fuel cell 1 is in the form of a PEM fuel cell and comprises an anode area 2 and a cathode area 3, which is separated from the anode area 2 by a membrane 4. A supply line 5 which opens into the cathode area 3 is provided in order to supply oxidant, in particular oxygen or air, to the cathode area 3. An off-gas line 6 leads away from the cathode area 3 and preferably opens into the environment at the output 61, which is illustrated symbolically. Recirculation can, of course, also be provided, in which case a further line which is not illustrated then branches off from the off-gas line 6 and feeds the off gas from the cathode area 3 back into the supply line 5 again.

Furthermore, the fuel cell system I comprises a supply line 7 which leads to the anode area 2. The fuel, in particular hydrogen or gas containing hydrogen, is supplied to the anode area 2 via this supply line 7.

An off-gas line 8 which leads away from the anode area 2 is associated with a recirculation apparatus 9, by which means the off gas which emerges from the anode area 2 is supplied into the supply line 7 again.

The fuel cell system I also comprises an outlet valve 10, which is arranged in the off-gas line 8 from the anode 2. As a separate component from this, the fuel cell system I comprises an atomizer apparatus 11 which in the exemplary embodiment is in the form of a two-material nozzle. A line part 12 is arranged between the outlet valve 10 and the atomizer apparatus 11, and is preferably in the form of a heated drainage line.

The atomizer apparatus 11 has an opening 15, which opens directly into the environment of the fuel cell system I and therefore also into the environment of the motor vehicle.

The water that is produced during operation of the fuel cell 1 is atomized directly into the environment via this atomizer apparatus 11.

The fuel cell system I preferably also comprises a separator, which is not illustrated in Figure 1, with the separated wastewater being atomized directly into the environment via the atomizer apparatus 11.

Figure 2 shows a further exemplary embodiment, in which, in contrast to the illustration in Figure 1, the atomizer apparatus 11 is integrated in the outlet valve 10. The atomizer apparatus 11 can preferably be integrated in the housing of the outlet valve 10. In this case as well, the atomizing process then takes place directly into the environment.

Figure 3 shows a further exemplary embodiment, in which the fuel cell system I has a separator 13 which is preferably connected to the fuel cell 1.

In the embodiment shown in Figure 3, the atomizer apparatus 11 is integrated in the separator 13, in particular in its housing. In this case as well, the water which has been collected in the separator 13 is then atomized directly into the environment via the opening 15 of the atomizer apparatus 11.

It is also possible for the separator 13 and the atomizer apparatus 11 to be in the form of separate components.

In all of the embodiments which are illustrated in Figures 1 to 3 and are also explained, it is possible for the atomizer apparatus 11 to be coupled to the off-gas line 6. This allows the opening 15 to open into the off-gas line 6. In this context, the opening 15 preferably opens into the off-gas line 6 close to the output 61. An embodiment such as this then allows the water to be atomized into the off-gas line 6. The process of atomizing into the off-gas line 6 preferably takes place at the output 61, which means that the atomized water particles that are produced then also still emerge as very fine particles in this way at the output 61 into the environment. This is advantageous for such indirect atomizing into the environment since this makes it possible to prevent large droplets from being formed again, or even a water run being formed, in the off-gas line 6.

Figure 4 shows a schematic illustration of the atomizer apparatus 11 with the opening 15. By way of example, the roadway 14 is also illustrated. The opening 15 is oriented at an angle to the roadway 14, with this angle being greater than 0° and less than 180°. The axis A, which runs parallel to the roadway 14, of the atomizer apparatus 11 is at an angle to the axis B of the opening 15. This arrangement always ensures that the water is always atomized into the environment such that it is oriented away from the roadway 14. The cloud of very fine water particles produced by the atomizing process is therefore first of all effectively conveyed upwards into the environment, away from the roadway 14. This allows the size of the particle cloud to increase, while the quantity of water particles making contact with the roadway 14 can be significantly reduced, and can be distributed over a much larger area. The risk of formation of smooth ice at low temperatures can be considerably reduced in this way.

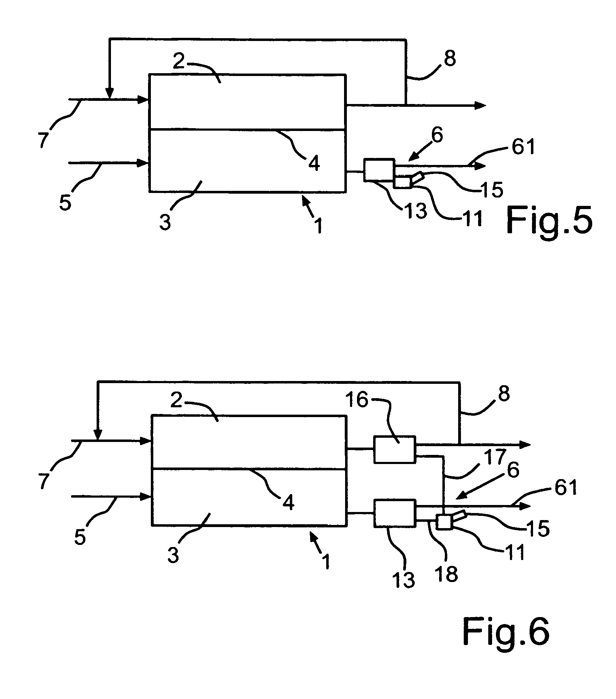

The water is primarily collected on the cathode side of the fuel cell 1, and secondarily on the anode side. The following exemplary embodiments in Figures 5 and 6 are therefore preferred embodiments, in order to allow the water on the cathode side to be atomized to the environment. In Figure 5, an outlet valve (not illustrated) is arranged in the off-gas line 6 which leads away from the cathode area 3, and the atomizer apparatus 11 is integrated in the outlet valve. A separator 13 can likewise be provided in addition to or instead of this for the outlet valve 10, and is either connected directly to the cathode area 3 or, as illustrated, is arranged in the off-gas line 6. In the embodiment shown in Figure 5, the opening 15 of the atomizer apparatus 11 opens directly into the environment, and the atomizer apparatus is integrated in the separator 13.

In the embodiment shown in Figure 6, two separators 13 and 16 are provided, of which the separator 16 is arranged in the off-gas line 8, and the separator 13 in the off-gas line 6. The water collected by the separators 13 and 16 is then passed to the atomizer apparatus 11, which atomizes it directly into the environment.

If the atomizer apparatus 11 is arranged separately from the two separators 13 and 16, the respectively collected water is passed via lines 17 and 18 to the atomizer apparatus 11. It is also possible for the atomizer apparatus 11 to be integrated in one of the separators 13 or 16.

It is also possible for the opening 15 to open into the off-gas line 6 close to the output 61, and for the water to be atomized into the off-gas line 6 close to the output 61.

### List of reference symbols

- 1: Fuel cell
- 2: Anode area
- 3: Cathode area
- 4: Membrane
- 5, 7: Supply lines
- 6, 8: Off-gas lines
- 9: Recirculation apparatus
- 10: Outlet valve
- 11: Atomizer apparatus
- 12: Line part
- 13, 16: Separator
- 14: Roadway
- 15: Opening
- 17, 18: Lines
- 61: Output
- A, B: Axes
- I: Fuel cell system
- α: Angle

## Claims

1. Fuel cell system having at least one fuel cell (1) by means of which water is produced during operation, having at least one atomizer apparatus (11) by means of which the water can be atomized into the environment,
**characterized in that**
the opening (15) of the atomizer apparatus (11) is arranged oriented upwards with respect to the ground (14) at an angle of more than 0° and less than 180°.

2. Fuel cell system according to Claim 1,
**characterized in that**
the atomizer apparatus (11) is a nozzle.

3. Fuel cell system according to Claim 1 or 2, **characterized in that**
the atomizer apparatus (11) is a two-material nozzle.

4. Fuel cell system according to one of the preceding claims,
**characterized in that**
the atomizer apparatus (11) is arranged in an off-gas line (6), which is associated with the off-gas path, of the cathode (3) of the fuel cell (1).

5. fuel cell system according to one of the preceding claims,
**characterized in that**
the atomizer apparatus (11) is integrated in an outlet valve (10) which is arranged in the off-gas path.

6. Fuel cell system according to one of the preceding Claims 1 to 5,
**characterized in that**
the atomizer apparatus (11) is formed separately from an outlet valve (10) which is arranged in the off-gas path, and is arranged downstream from the outlet valve (10) in the off-gas path, in the flow direction of the off gas.

7. Fuel cell system according to one of the preceding claims,
**characterized in that**
the water that is produced is collected in one or more separators (13, 16), and is combined in the atomizer apparatus (11) for atomizing into the environment.

8. Fuel cell system according to Claim 7,
**characterized in that**
a separator (13, 16) is arranged in a supply line (5, 7) or in an off-gas line (6, 8) from the anode (2) or the cathode (3) of the fuel cell (1).

9. Fuel cell system according to one of the preceding claims,
**characterized in that**
the atomizer apparatus (11) has an associated separator (13, 16), and in particular is integrated in the separator (13, 16).

10. Fuel cell system according to one of the preceding claims,
**characterized in that**
the atomizer apparatus (11) opens into an off-gas line (6) which leads away from the cathode (3) of the fuel cell (1), in particular close to an output (61), which opens into the environment, of the off-gas line (6), and the water can be atomized into this off-gas line (6).

11. Method for operation of a fuel cell system (I) having at least one fuel cell (1) which produces water during operation, wherein the water is atomized into the environment by an atomizer apparatus (11) and wherein the opening (15) of the atomizer apparatus (11) is arranged oriented upwards with respect to the ground (14) at an angle of more than 0° and less than 180°.

## Patentansprüche

1. Brennstoffzellensystem mit mindestens einer Brennstoffzelle (1), mittels welcher im Betrieb Wasser erzeugt wird, mit mindestens einer Zerstäubereinrichtung (11), mittels welcher das Wasser in die Umwelt zerstäubt werden kann,
**dadurch gekennzeichnet, dass**
die Öffnung (15) der Zerstäubungseinrichtung (11) im Verhältnis zum Boden (14) in einem Winkel von mehr als 0° und weniger als 180° nach oben gerichtet ist.

2. Brennstoffzellensystem nach Anspruch 1,
**dadurch gekennzeichnet, dass**
die Zerstäubungseinrichtung (11) eine Düse ist.

3. Brennstoffzellensystem nach Anspruch 1 oder 2,
**dadurch gekennzeichnet, dass**
die Zerstäubungseinrichtung (11) eine Zweistoffdüse ist.

4. Brennstoffzellensystem nach einem der vorhergehenden Ansprüche,
**dadurch gekennzeichnet, dass**
die Zerstäubungseinrichtung (11) in einer Abgasleitung (6) angeordnet ist, die mit dem Abgasweg der Kathode (3) der Brennstoffzelle (1) verbunden ist.

5. Brennstoffzellensystem nach einem der vorhergehenden Ansprüche,
**dadurch gekennzeichnet, dass**
die Zerstäubungseinrichtung (11) in ein im Abgasweg angeordnetes Auslassventil (10) integriert ist.

6. Brennstoffzellensystem nach einem der Ansprüche 1 bis 5,
**dadurch gekennzeichnet, dass**
die Zerstäubungseinrichtung (11) getrennt von einem im Abgasweg angeordneten Auslassventil (10) ausgebildet und in der Strömungsrichtung des Gases betrachtet stromab des Auslassventils (10) im Abgasweg angeordnet ist.

7. Brennstoffzellensystem nach einem der vorhergehenden Ansprüche,
**dadurch gekennzeichnet, dass**
das erzeugte Wasser in einem oder mehreren Abscheider(n) (13, 16) gesammelt und in der Zerstäubungseinrichtung (11) zum Zerstäuben in die Umwelt vereinigt wird.

8. Brennstoffzellensystem nach Anspruch 7,
**dadurch gekennzeichnet, dass**
ein Abscheider (13, 16) in einer Zuleitung (5, 7) oder in einer Abgasleitung (6, 8) von der Anode (2) oder der Kathode (3) der Brennstoffzelle (1) angeordnet ist.

9. Brennstoffzellensystem nach einem der vorhergehenden Ansprüche,
**dadurch gekennzeichnet, dass**
die Zerstäubungseinrichtung (11) einen zugehörigen Abscheider (13, 16) aufweist und insbesondere in den Abscheider (13, 16) integriert ist.

10. Brennstoffzellensystem nach einem der vorhergehenden Ansprüche,
**dadurch gekennzeichnet, dass**
die Zerstäubungseinrichtung (11) in eine Abgasleitung (6) führt, die von der Kathode (3) der Brennstoffzelle (1) weg führt, insbesondere in der Nähe eines Ausgangs (61) der Abgasleitung (6), der in die Umwelt führt, und dass das Wasser in diese Abgasleitung (6) zerstäubt werden kann.

11. Verfahren zum Betrieb eines Brennstoffzellensystems (1) mit mindestens einer Brennstoffzelle (1), die im Betrieb Wasser erzeugt, wobei das Wasser von einer Zerstäubungseinrichtung (11) in die Umwelt zerstäubt wird und wobei die Öffnung (15) der Zerstäubungseinrichtung (11) im Verhältnis zum Boden (14) in einem Winkel von mehr als 0° und weniger als 180° nach oben gerichtet ist.

## Revendications

1. Système de pile à combustible ayant au moins une pile à combustible (1) qui permet de produire de l'eau pendant le fonctionnement, ayant au moins un appareil atomiseur (11) qui permet d'atomiser l'eau dans l'environnement, **caractérisé en ce que** l'orifice (15) de l'appareil atomiseur (11) est orienté vers le haut par rapport au sol (14) à un angle supérieur à 0° et inférieur à 180°.

2. Système de pile à combustible selon la revendication 1, **caractérisé en ce que** l'appareil atomiseur (11) est une buse.

3. Système de pile à combustible selon la revendication 1 ou 2, **caractérisé en ce que** l'appareil atomiseur (11) est une buse à deux composants.

4. Système de pile à combustible selon l'une quelconque des revendications précédentes, **caractérisé en ce que** l'appareil atomiseur (11) est disposé dans la conduite de gaz de d'échappement (6), qui est associée au passage de gaz d'échappement, de la cathode (3) de la pile à combustion (3).

5. Système de pile à combustible selon l'une quelconque des revendications précédentes, **caractérisé en ce qu'**un appareil atomiseur (11) est intégré dans une soupape de sortie (10) qui est disposée dans le passage de gaz d'échappement.

6. Système de pile à combustible selon l'une quelconque des revendications précédentes 1 à 5, **caractérisé en ce que** l'appareil atomiseur (11) est distinct de la soupape de sortie (10) qui est disposée dans le passage de gaz d'échappement, et est montée en aval de la soupape de sortie (10) dans le passage de gaz d'échappement, dans la direction d'écoulement des gaz d'échappement.

7. Système de pile à combustion selon l'une quelconque des revendications précédentes, **caractérisé en ce que** l'eau produite est recueillie dans l'un ou dans plusieurs séparateurs (13, 16) et est accumulée dans l'appareil atomiseur (11) pour être atomisée dans l'environnement.

8. Système de pile à combustible selon la revendication 7, **caractérisé en ce qu'**un séparateur (13, 16) est disposé dans la conduite d'alimentation (5, 7) ou dans la conduite de gaz d'échappement (6, 8) de l'anode (2) ou de la cathode (3) de la pile à combustion (1).

9. Système de pile à combustible selon l'une quelconque des revendications précédentes, **caractérisé en ce que** l'appareil atomiseur (11) possède un séparateur associé (13, 16), et en particulier est intégré dans le séparateur (13, 16).

10. Système de pile à combustible selon l'une quelconque des revendications précédentes, **caractérisé en ce que** l'appareil atomiseur (11) débouche dans une conduite de gaz d'échappement (6) qui part de la cathode (3) de la pile à combustion (1), en particulier à proximité d'une sortie (61), qui débouche dans l'environnement, de la conduite de gaz d'échappement (6), et l'eau peut être atomisée dans la conduite de gaz d'échappement (6).

11. Procédé de fonctionnement d'un système de pile à combustible (1) ayant au moins une pile à combustible (1) qui produit de l'eau pendant le fonctionnement, l'eau étant atomisée dans l'environnement par un appareil atomiseur (11) et l'orifice (15) de l'appareil atomiseur (11) étant orienté vers le haut par rapport au sol (14) et à un angle supérieur à 0° et inférieur à 180°.
